**Europäisches Patentamt**

**European Patent Office**

**Office européen des brevets**

(19)

(11) Publication number: **0 109 940**
**A1**

(12) # EUROPEAN PATENT APPLICATION

(21) Application number: **83830224.8**

(22) Date of filing: **15.11.83**

(51) Int. Cl.³: **B 25 J 17/02**
**F 16 H 49/00**

(30) Priority: **19.11.82 IT 6835582**

(43) Date of publication of application:
**30.05.84 Bulletin 84/22**

(84) Designated Contracting States:
**AT BE CH DE FR GB LI LU NL SE**

(71) Applicant: **WRIST di D. ROSTAGNO & C. S.a.s.**
**Corso Vittorio Emanuele 16**
**I-10080 Rivara Canavese Torino(IT)**

(72) Inventor: **Rostagno, Giovanni Domenico**
**Corso Vittorio Emanuele 16**
**I-10080 Rivara Canavese (Torino)(IT)**

(74) Representative: **Buzzi, Franco et al,**
**c/o Jacobacci-Casetta & Perani S.p.A. Via Alfieri, 17**
**I-10121 Torino(IT)**

(54) Drive unit for wrists of industrial robots and like applications.

(57) A member, such as the wrist of an industrial robot (12) which is movable in opposite senses, is remotely driven by means of a pair of push rods (40, 42) movable simultaneously in straight lines in such a manner that, when one push rod moves in one direction, the other push rod moves in the opposite direction through transmission means including two rows of rigid rolling members (88, 90) movable in respective guide channels (48, 50) which in one end portion house the said push rods and at the other end terminate at the movable member.

The rolling members may be balls or barrel rollers provided with grooves in which circulating balls are engaged.

EP 0 109 940 A1

./...

FIG. 1

Drive unit for wrist of industrial robots and like applications.

The present invention relates to a drive unit for wrists of industrial robots and like applications in which a member which is movable in opposite senses is remotely driven by an actuator through transmission means.

The object of the present invention is to provide a drive unit of irreversible, mechanical type which is of very small size and which is able to ensure very high precision and reliability in use.

In order to achieve this object, the present invention provides a drive unit of the type defined above, characterised in that the actuator includes a pair of parallel push members movable simultaneously in straight lines in such a manner that when one push member moves in one direction the other push member moves in the opposite direction, and in that the transmission means include two rows of rigid rolling members, each of which is movable in a respective guide channel which in one end portion houses one of the said push members and at the other end terminates at the movable member.

The rolling members of each row may be constituted by balls or alternatively by barrel rollers having grooves in which circulating balls are engaged.

In view of the conformation of the transmission means, the drive unit according to the invention may, to advantage, be applied to all those cases in which, for reasons of bulk, precision, temperature and vibration it is not possible to use drive units with conventional transmission systems. Hence the drive unit according to the invention, in addition to being usable in the field of industrial robots, may for example be used in the field of aeronautics for operating movable surfaces or weapons on an aeroplane, or in the field of high-pressure metal die-casting or moulding of plastics materials for operating the complex mould cores.

The invention will now be described in detail with reference to the appended drawings, provided purely by way of non-limiting example, in which:

Figure 1 is a longitudinal sectional view illustrating the arm of an industrial robot the wrist of which is operated by a drive unit according to the invention,

Figure 2 is a cross-sectional view taken on line II-II of Figure 1,

Figure 3 is a cross-sectional view taken on line III-III of Figure 1,

Figure 4 is a schematic sectional view on an enlarged scale of a first variant of a part of the drive unit,

Figure 5 is a view similar to Figure 4 of a second variant of the unit,

Figure 6 is a cross-sectional view taken on line VI-VI of Figure 5,

Figure 7 is a schematic perspective view on an enlarged scale of a third variant of the drive unit,

Figure 8 is a cross-sectional view taken on line VIII-VIII of Figure 7, and

Figure 9 illustrates a variant of Figure 1.

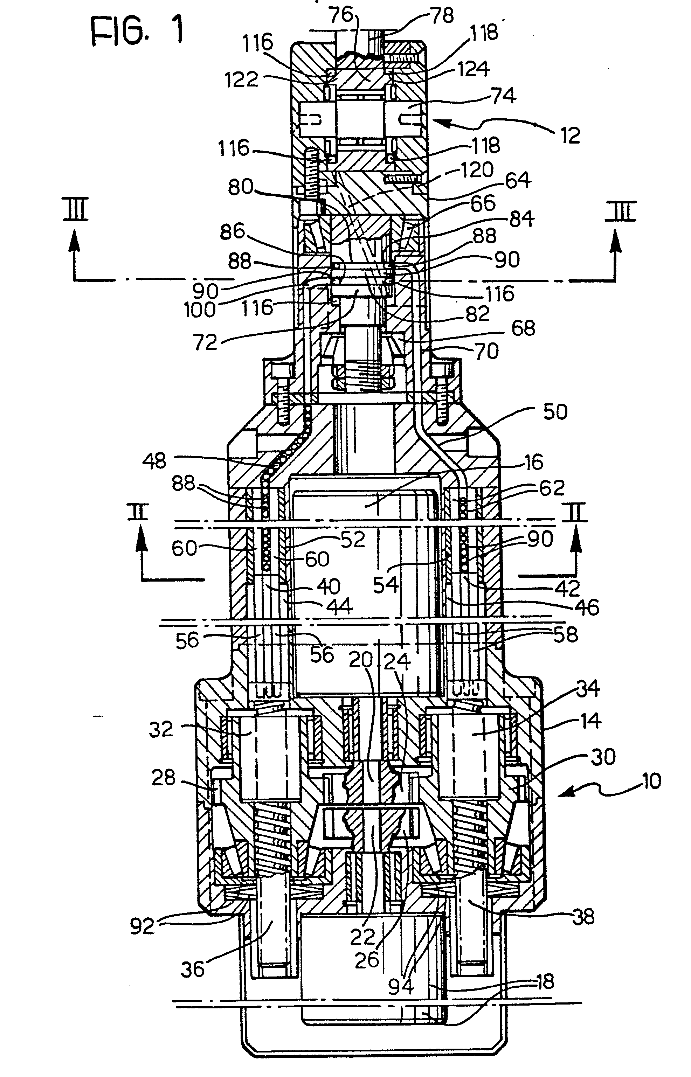

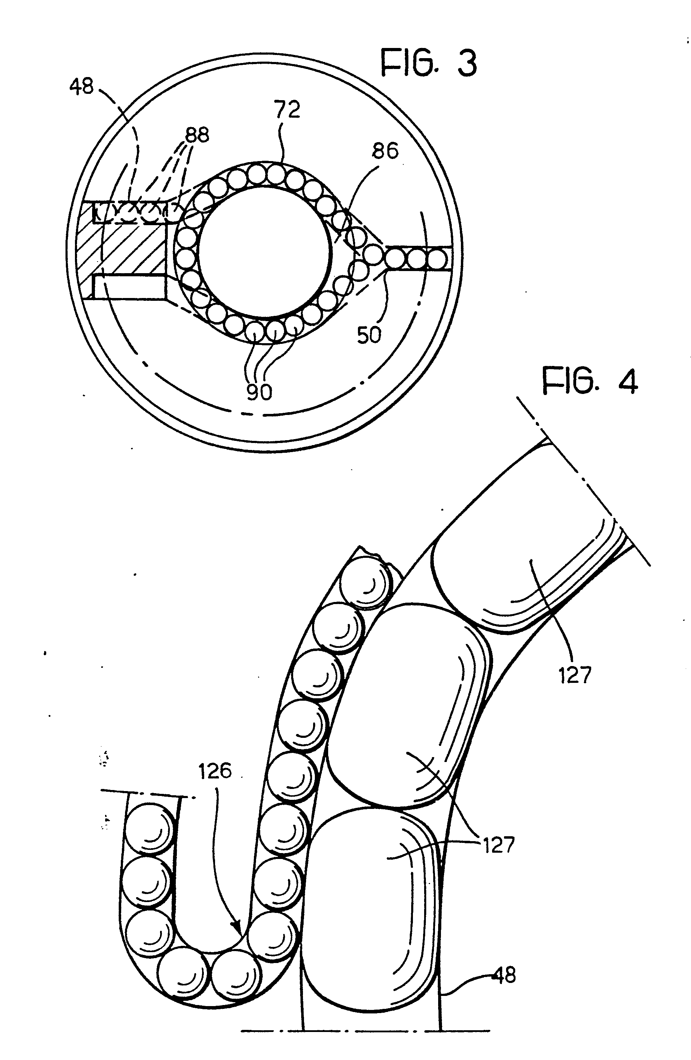

Referring initially to Figures 1 to 3, the end portion of an arm of an industrial robot is generally indicated 10 and is provided at one end with a wrist, generally indicated 12. The arm portion 10 includes an outer cylindrical housing 14 within which are two D.C. electric motors 16, 18 with opposing shafts 20, 22 carrying respective sprockets 24, 26.

The sprocket 24 driven by the motor 16 meshes with a pair of gears 28, 30 rotatably mounted in the housing 14 in diametrally opposite positions and each rigid with a respective nut 32, 34.

Respective screws 36, 38 of conventional ball-screw type, not illustrated in the drawings, are engaged in the nuts 32, 34 one of which is right-handed and the other of which is left-handed. The two screws 36, 38 each carry at one end a respective axial rod 40, 42 acting as a push member and movable in a respective passage 44, 46 in the housing 14. The free ends of the push rods 40, 42 project into channels 48, 50 formed partly in hollow inserts 52, 54 in the passages 44, 46 and partly directly in the portion of the housing 14 carrying the wrist 12.

Alongside each push rod 40, 42 is a trio of guide rods 56, 58 also carried by the respective screws 36, 38 and movable along passages 60, 62 formed in the inserts 52, 54 around the corresponding parts of the channels 48, 50.

The wrist 12 is constituted by a cylindrical body 64 rotatably supported by bearings 66, 68 within a hollow spigot 70 of smaller diameter than the housing 14. The body 64 has a shaft 72 coaxial with the housing 14 at its end facing the motor 16 and a transverse pin 74 at its opposite end on which there is rotatably mounted an annular element 76 having an external support lug 78 carrying, for example , a manipulating gripper.

The shaft 72 is formed with two external, circumferential grooves 80,82 communicating with the channel 48 and with the channel 50 respectively, each groove being barred by a respective stop member indicated 84 and 86 respectively.

The channel 48 and its groove 80 and the channel 50 and its groove 82 house respective rows of steel balls 88, 90 which bear at one end against the push rods 40, 42 and at the other end against the stops 84, 86. The balls 88,90 are located in rolling contact with the adjacent balls and with the walls of the channels 48 50 and lubrication is supplied by means of grease or oil. In order to avoid any play between the balls 88,90 of the two rows, two cup spring assemblies 92, 94 are provided which bias the sprockets 28, 30, and hence the nuts 32, 34 with the screws 36, 38 and the push rods 40, 42 resiliently towards the balls 88,90.

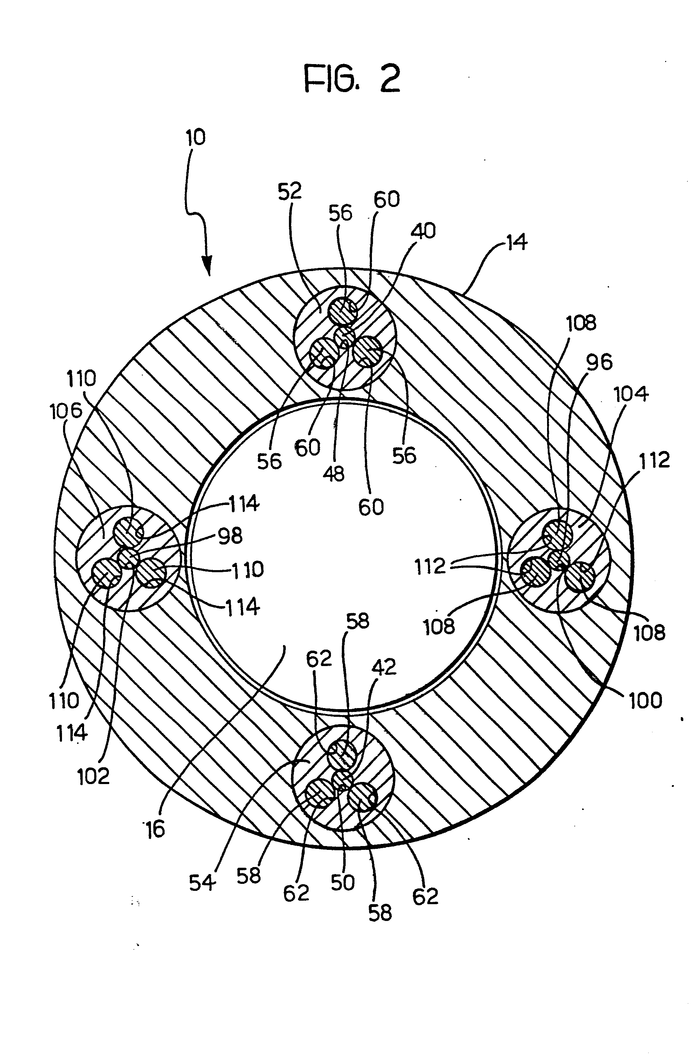

The sprocket 26 of the second electric motor 18 also meshes with a pair of sprockets, not shown in the drawings, entirely similar to the sprockets 28 and 30 and staggered by 90$^o$ relative thereto. These sprockets are associated with respective nut-screw assemblies, identical to those described above, which drive two push rods 96,98 which are movable in respective channels 100, 102 formed partly in inserts 104, 106 identical to the inserts 52, 54 (Figure 2) and partly in the portion of the housing 14 facing the wrist 12. The push rods 96 and 98 are associated with trios of guide rods 108, 110 movable with these push rods along passages 112, 114 formed around the channels 100, 102 in the inserts 104 and 106. The channels 100, 102 contain respective rows of steel balls 116, 118 and terminate, through passages within the body 64, one of which is indicated in broken outline by 120 in Figure 1, at respective annular grooves 122, 124 formed in the annular element 76 coaxial with the transverse pin 74. Again in this case, the two rows of balls 116, 118 are urged against respective stop members, not visible, formed in predetermined portions of the grooves 122, 124 by respective cup springs,not visible, entirely similar to the springs 92, 94.

The motor 16 with the push rods 40, 42 and the rows of balls 48, 50 allow the wrist 12 to be rotated about the axis of the body 64, or of the housing 14, while the motor 18 with its push rods 96, 98 and the rows of balls 116 and 118 achieves rotation about the axis of the shaft 74 in the manner described below.

The starting of the motor 16,which may be controlled electronically in a conventional manner, rotates the nuts 32 and 34 and consequently moves the screws 36 and 38 in opposite directions. Thus one of the columns of balls 88, 90 advances under the action of its push rod 40, 42 towards the wrist 12 and into the corresponding groove 80, 82 of the shaft 72. Simultaneously, the other push rod 42, 40 is retracted allowing the balls of the other row 90, 88 to flow out of and away from the other groove 82, 80 of the shaft 72, whereby the latter, together with the body 64 and the support 78, is rotated in one sense or the other.

If the motor 18 is operated instead, one of the push rods 96, 98 with its balls 116, 118, is advanced and the other push rod 98, 96 and the corresponding row of balls 118, 116 is retracted, effecting the rotation of the annular element 76, and hence of the support 78, in one sense or the other about the transverse pin 74.

Clearly, by combining the operation of the motor 116 with the operation of the motor 18 one can impart all the necessary working movements to the wrist 12 and to the working member attached to the support 78.

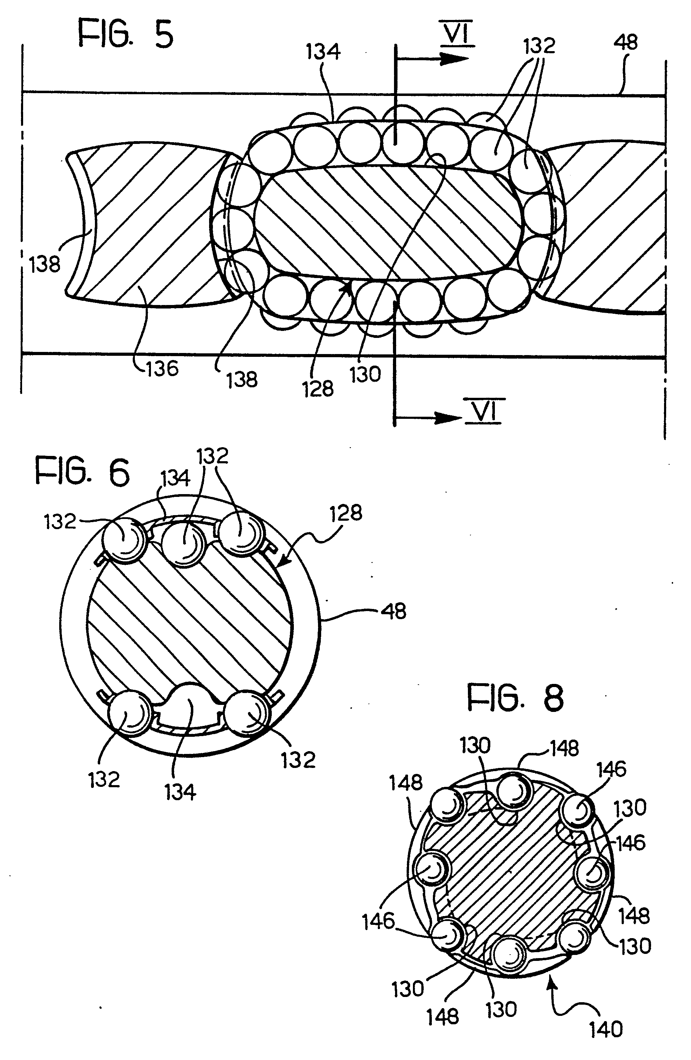

In order for the channels 48, 50 and 100, 102 in which the balls 88, 90 and 116, 118 are located to reach the respective grooves 80, 82 and 122, 124, they must generally have curved portions in which the friction between the balls and the walls of the respective channels is obviously greater than in the straight portions thereof. In order to reduce the friction in the curved portions and improve the transmission efficiency, the solutions illustrated in Figures 4 to 8 may be used.

In the case of Figure 4, the balls 88, 90, 116 and 118 are replaced by barrel rollers 127 and the outer walls of the curved portions of the channels 48, 50 and 100, 102 are defined by circulating balls 126.

In the case of Figures 5 and 6, the balls 88, 90 and 116, 118 are replaced by barrel rollers 128 which have a smaller diameter than the respective ducts and have three longitudinal annular grooves 130 in which circulating balls 132 are inserted and held by cages 134. The depth of the outer grooves 130 is less than that of the intermediate groove 130 so that the circulating balls 132 in the outer grooves 130 are in contact with the walls of the channel while the circulating balls 132 in the intermediate grooves 130 are used solely in the frontal and rear contact of each roller 128 with the adjacent rollers. In practice, as illustrated in Figure 5, an intermediate member 136 is located between each roller 128 and the adjacent roller, this member having opposite concave faces 138 which bear against the balls 132 between the rollers 128.

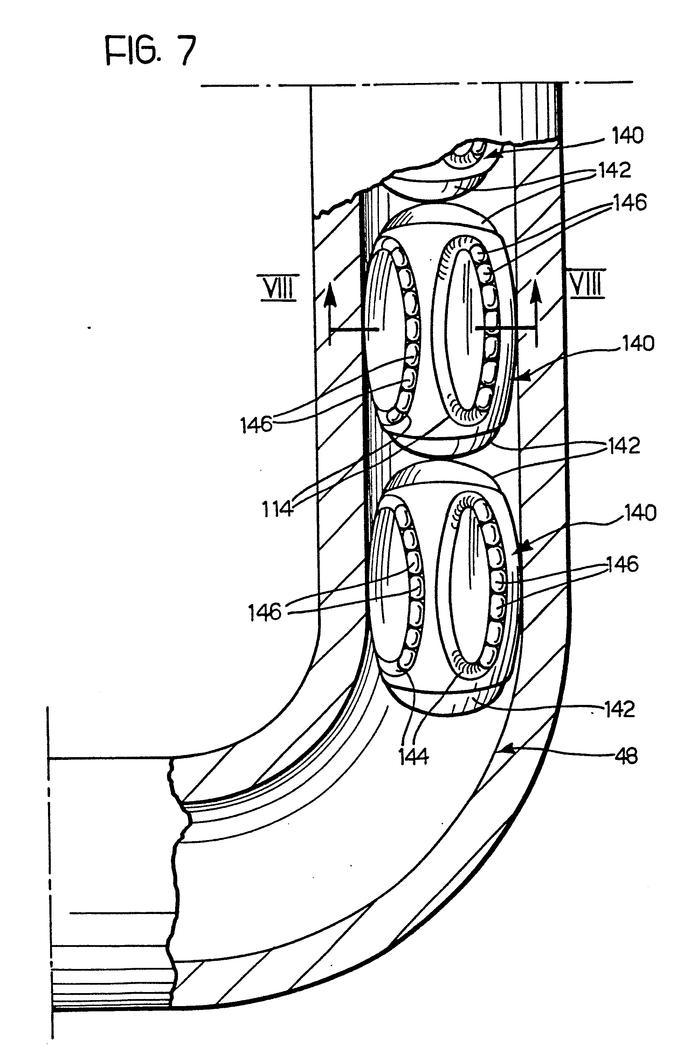

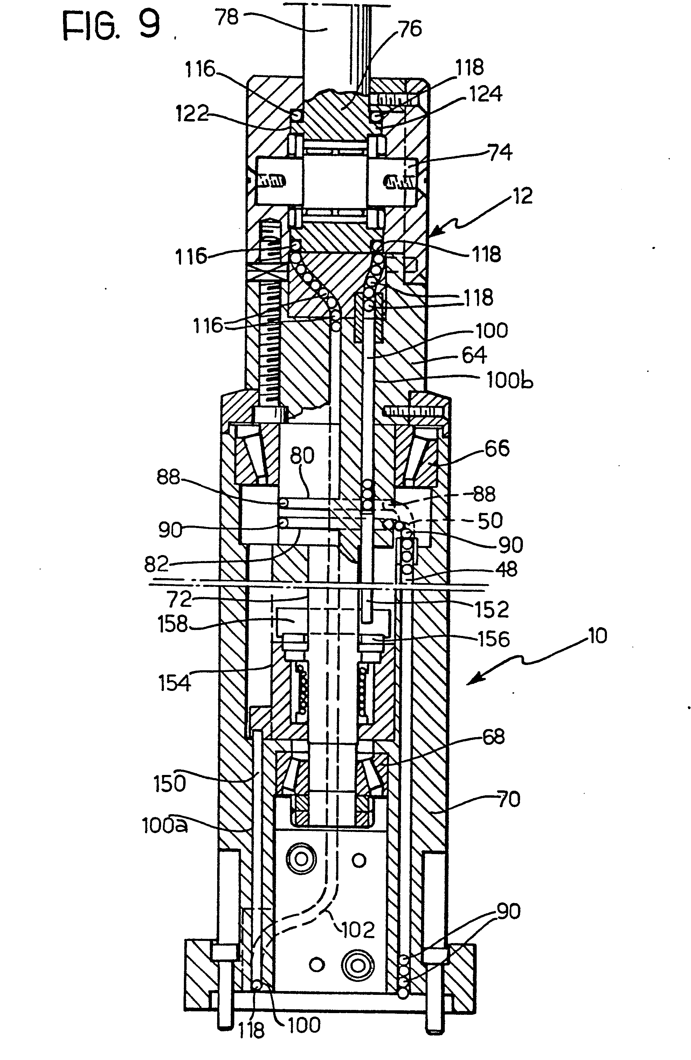

In the case illustrated in Figures 7 and 8, the balls 88, 90 and 116, 118 are replaced by barrel rollers 140 having substantially hemispherical ends 142 and lateral surfaces formed with four annular grooves 144 of substantially elliptical form in which circulating balls 146 are engaged. The grooves 144 have a delivery portion with a greater depth than a return portion and the balls 146 are retained relative to the rollers 140 by means of cages 148, visible in Figure 8, shaped so that only the balls 146 located in the delivery portions of the grooves 144 are in rolling contact with the channel walls.

In all the examples described above, the ball or roller rolling members are located without interruption between the respective push rods 40, 42 and 96, 98 and the wrist 12. However, intermediate push rods may be intercalated between the rolling members of one or more rows as in the case illustrated in the variant of Figure 9. In this variant the channels 48 and 50 extend along one side of the spigot 70 of the arm 10, the channel 102 extends axially through the shaft 72, while the channel 100 has an initial portion 100a formed in the spigot 70 on the opposite side from the ducts 48, 50 and a portion 100b formed at the side of the channel 102 in that part of the shaft 72 adjacent the wrist 12. In this case, the row of balls 118 is interrupted and two rods 150, 152 acting as push rods are inserted in the portion 100a of the duct 100 and in the initial part of the portion 100b thereof. The push rod 150 controls a bush 154 mounted coaxially for sliding movement on the shaft 72 and carrying, by means of a thrust-bearing bush 156, a ring 158 in which the end of the push rod 152 opposite the portion 100b of the channel 100 is engaged. In this variant, the rotational movements of the wrist 12 are driven in a manner entirely similar to that described above except for the fact that the rotation of the annular element 76 about the transverse pin 74 under the action of the balls 118 is achieved via the action of the two intermediate push rods 150 and 152.

It will be clear from the description above that the drive unit according to the invention has a noticeably smaller bulk and is able to ensure considerably greater precision and reliability than conventional drive units of mechanical, pneumatic or hydraulic type. For these reasons, the drive unit according to the invention can be used to advantage in the field of aeronautics for operating movable control surfaces or weapons on an aeroplane, in the field of high-pressure metal die-casting and the moulding of plastics material for operating cores in particularly complex moulds, and in other similar fields, as well as for industrial robots.

CLAIMS

1. Drive unit for wrists of industrial robots and like applications in which a member movable in opposite senses is remotely driven by an actuator through transmission means, characterised in that the actuator includes a pair of parallel push members (40, 42; 96, 98) movable simultaneously in straight lines in such a manner that, when one push member moves in one direction, the other push member moves in the opposite direction, and in that the transmission means include two rows of rigid rolling members (88, 90; 116, 118; 128; 140) each of which is movable in a respective guide channel (48, 50; 100, 102) which at one end houses one of the said push members and at the other end terminates at the movable member (12).

2. Drive unit according to Claim 1, characterised in that the rolling members of each row (88,90; 116,118; 128; 140) follow each other without interruption.

3. Drive unit according to Claim 1, characterised in that intermediate push members (136; 150, 152) are intercalated between the rolling members of each row (88,90; 116,118; 128; 140).

4. Drive unit according to any one of Claims 1 to 3, characterised in that the rolling members are balls (88,90; 116,118).

5. Drive unit according to any one of Claims 1 to 3, characterised in that the rolling members are barrel rollers (128; 140) provided with grooves (130; 144) in which circulating balls (132; 146) are engaged.

6. Drive unit according to any one of Claims 1 to 5, characterised in that the guide channels (48,50; 100, 102) have curved portions the sides of which are defined at least in part by circulating balls (126).

7. Drive unit according to any one of Claims 1 to 6, in which the movable member is rotatable, characterised in that the movable member (12) has two annular grooves (80, 82; 122, 124) coaxial with its axis of rotation in which the two rows of rolling members (88, 90; 116,118; 128; 140) terminate, each groove having a stop member (84, 86) for the respective row of rolling members.

8. Drive unit according to Claim 7, in which the movable member is rotatable about two axes perpendicular to each other, characterised in that it includes two pairs of push members (40, 42;96;98) and two pairs of rows of rolling members (88, 90; 116, 118) associated with these push members for effecting the displacement of the movable member (12) about one or the other axis of rotation respectively.

9. Drive unit according to any one of the preceding claims, characterised in that each push member (40, 42; 96, 98) has respective associated guide rods (56, 58; 108, 110) slidably mounted in respective guide passages (60, 62; 112, 114) located around the guide channels (48, 50; 100, 102) for the respective row of rolling members (88, 90; 116, 118).

10. Drive unit according to one or more of the preceding claims, characterised in that the push members of the or each pair (40, 42; 96,98) are driven by an electric motor (16,18) through screw and nut assemblies (36,32;38,34).

11. Drive unit according to one or more of the preceding claims, characterised in that each push member (40, 42; 96, 98) is acted upon by resilient means (92, 94) biassing it towards the respective row of rolling members (88,90;116,118; 128, 140).

FIG. 1

0109940

1/6

2/6

FIG. 2

0109940

0109940

FIG. 3

48

88

72

86

50

90

FIG. 4

127

127

126

48

FIG. 5

FIG. 6

FIG. 8

FIG. 7

FIG. 9.

0109940

**European Patent Office**

# DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | FR-A-1 240 873 (VYZKUMNY A ZKUSEBNI LETECKY USTAV LETNANY U PRAHY)<br>* Page 1, column 2, line 36 - page 2, column 1, line 28 * | 1,2,4, 8 | B 25 J 17/02<br>F 16 H 49/00 |
| Y | US-A-3 593 588 (HULSE)<br>* Column 2, lines 21-58 * | 1,2,4, 8 | |
| A | FR-A-2 251 412 (SEREM)<br>* Page 3, lines 6-18 * | 1,2 | |
| A | US-A-3 472 085 (ROSEN)<br>* Column 3, line 46 - column 4, line 25 * | 3,10 | |
| A | US-A-2 901 914 (PRESTON)<br>* Column 2, lines 21-28 * | 11 | TECHNICAL FIELDS SEARCHED (Int. Cl. ³)<br><br>B 25 J<br>F 16 H |
| A | FR-A-1 561 464 (O.N.E.R.A.)<br>* Page 2, column 1, lines 28-40 * | 10 | |
| A | US-A-3 212 649 (JOHNSON et al.)<br>* Column 12, lines 27-51; figure 38 * | 1 | |
| A | GB-A- 980 044 (BELL PRECISION ENGINEERING CO.) | | |
| | --- -/- | | |

The present search report has been drawn up for all claims

| Place of search | Date of completion of the search | Examiner |
|---|---|---|
| THE HAGUE | 20-02-1984 | LAMMINEUR P.C.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82

European Patent
Office

| | DOCUMENTS CONSIDERED TO BE RELEVANT | | Page 2 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | US-A-2 104 122 (GOATES) | | |
| | --- | | |
| A | US-A-2 536 930 (OBONI)<br>* Page 9, line 29 - page 10, line 7 * | 1 | |
| | ----- | | |

|  | TECHNICAL FIELDS SEARCHED (Int. Cl. ³) |
|---|---|

The present search report has been drawn up for all claims

| Place of search<br>THE HAGUE | Date of completion of the search<br>20-02-1984 | Examiner<br>LAMMINEUR P.C.G. |
|---|---|---|